Europäisches Patentamt

European Patent Office

Office européen des brevets

(11) Numéro de publication : **0 015 790**
**B1**

# (12) FASCICULE DE BREVET EUROPÉEN

(45) Date de publication du fascicule du brevet :
22.06.83

(51) Int. Cl.³ : **B 65 G 15/16**

(21) Numéro de dépôt : 80400144.4

(22) Date de dépôt : 30.01.80

(54) **Elévateur vertical continu.**

(30) Priorité : 12.02.79 FR 7903462

(43) Date de publication de la demande :
17.09.80 Bulletin 80/19

(45) Mention de la délivrance du brevet :
22.06.83 Bulletin 83/25

(84) Etats contractants désignés :
AT BE CH DE FR GB NL SE

(56) Documents cités :
DE A 2 622 366
FR A 1 182 570
FR A 1 322 436
FR A 1 356 419
FR A 1 380 653
FR A 2 088 076
FR E 85 888
US A 3 819 030

(73) Titulaire : **TISSMETAL LIONEL-DUPONT**
**138 boulevard de la Croix-Rousse**
**F-69001 Lyon (FR)**

(72) Inventeur : **Fouassier, Michel Gilbert Yves**
**89 rue de Verdun**
**F-94500 Champigny-sur-Marne (FR)**
Inventeur : **Piette, Rémi Robert Alfred**
**4 rue du Jura**
**F-75013 Paris (FR)**

(74) Mandataire : **Casanova, André et al**
**CABINET ARMENGAUD JEUNE CASANOVA, AKER-**
**MAN, LEPEUDRY 23 boulevard de Strasbourg**
**F-75010 Paris (FR)**

Jouve, 18, rue St-Denis, 75001 Paris, France

Elévateur vertical continu

La présente invention a pour objet un élévateur-abaisseur vertical à fonctionnement en continu destiné en particulier mais non exclusivement à l'élévation d'objets de forme variable tels que bagages, colis, sacs postaux ou analogues.

Il existe, indépendamment des moyens permettant l'élévation discontinue d'objets groupés tels que monte-charges, grues, etc., des machines du type NORIA dans lesquelles chaque objet est déposé dans un godet ou auge de l'élévateur. Ces machines nécessitent un chargement synchronisé et un tri et un groupement préalables au chargement.

On connaît par ailleurs des élévateurs à double bandes dans lesquels les objets sont entraînés verticalement par pincement ou serrage entre deux bandes animées d'un même mouvement de translation verticale.

Dans le brevet français N° 1 356 419 est décrit un transporteur élévateur comprenant deux bandes sinueuses entraînées en synchronisme de manière à ce que les sinuosités des bandes s'emboîtent l'une dans l'autre ou se présentent crête contre crête, ce qui permet, par déformation élastique desdites bandes l'introduction des objets entre celles-ci.

Dans le brevet français N° 1 322 436, deux bandes sans fin souples tendues élastiquement et de manière sensiblement uniforme dans le sens de leur largeur sont entraînées par deux paires de chaînes à galets guidées dans des rails parallèles et entraînées d'un même mouvement ascensionnel par les chaînes à galets sur lesquelles est appliqué l'effort moteur de traction nécessaire, les objets à élever étant placés entre les deux bandes.

Le document de brevet FR-A-2 088 076 a pour objet une bande presseuse destinée à plaquer les objets sur un transporteur. Dans ce brevet, un transporteur à palettes du type décrit dans le brevet français n° 1 182 570 comprend une portion verticale ou sensiblement verticale, portion sur laquelle une bande presseuse défile parallèlement audit transporteur de manière à appliquer les objets sur le transporteur. A cette fin, la bande presseuse comporte des liens élastiques et une bande souple rendue solidaire desdits liens élastiques, les liens étant disposés entre deux bordures longitudinales maintenues parallèlement l'une à l'autre à un écartement constant. La longueur de la bande souple est supérieure à la longueur de la bande presseuse, les plis formés donnant une certaine élasticité à celle-ci, élasticité qui permet de saisir les objets et de les appliquer contre le transporteur. Pratiquement, le système décrit par le brevet fonctionne d'une manière satisfaisante mais il présente l'inconvénient de nécessiter soit trois chaînes d'entraînement, l'une pour le transporteur et les deux autres pour la bande presseuse, soit une bande continue avec un système complexe de rouleaux ne pouvant assurer une courbure concave que très difficilement et deux chaînes d'entraînement pour la bande presseuse. Dans les deux cas, le coût de l'appareil est excessif et dans le second cas le fonctionnement n'est pas satisfaisant.

Dans le document de brevet FR-A-2 088 076, le travail d'élévation résulte de la coopération du mouvement du transporteur présentant une surface en écailles relativement dure et de l'action de la bande presseuse qui applique les objets contre la surface du transporteur et n'a pour but que d'éviter le glissement des objets sur le transporteur sous l'action de la pesanteur. En fait, la force nécessaire à l'élévation est fournie par le transporteur et la bande presseuse fonctionnant en synchronisme. La présente invention relève en fait d'un autre concept puisque l'effort d'élévation est fourni par la bande élévatrice et ses moyens d'entraînement, le transporteur ne jouant pratiquement plus qu'un rôle passif de maintien et de guidage dans une position verticale ou inclinée déterminée. Dans ces conditions, la structure de ce qui était le transporteur peut être très notablement simplifiée et en particulier les moyens de guidage et d'entraînement du transporteur peuvent être très sensiblement allégés. A la limite d'ailleurs, la bande de maintien pourrait être remplacée par une sole de glissement dans des cas particuliers où la force nécessaire à l'élévation ou au maintien des objets lors de leur descente est fournie par la bande presseuse.

Par ailleurs, les brevets US-A-3 819 030 et FR-A-1 380 653 décrivent des élévateurs verticaux à fonctionnement continu pour objets à volumes irréguliers, comprenant deux bandes sans fin s'étendant parallèlement l'une à l'autre le long de défilements sensiblement verticaux sur leur parcours respectif, l'une des bandes étant relativement rigide alors que l'autre est relativement souple et guidée par au moins une chaîne à galets sur les maillons de laquelle sont liés, par l'intermédiaire de pièces support rendues solidaires de la chaîne et présentant des orifices, les bords de la bande sans fin souple.

Dans le brevet US-A-3 819 030 précité, la liaison des bords de la bande sans fin souple aux pièces support s'effectue par l'intermédiaire de liens élastiques solidaires de cette bande sans fin souple et disposés entre deux bordures longitudinales maintenues parallèles l'une à l'autre, et, plus précisément, des éléments en forme de ressort à boudin aux extrémités des liens élastiques exercent avec ces derniers une traction sur les pièces support, de section L, qui sont appliquées contre une glissière maintenue par une plaque de réaction solidaire des rails de la chaîne à galets.

Dans le brevet FR-A-1 380 653 précité, la liaison des bords de la bande sans fin souple aux pièces support s'effectue par l'intermédiaire de jeux de crochets rigides passant dans des plaques d'attache fixées aux bords de la bande sans fin souple.

Mais, dans ces dispositifs connus, aucun moyen particulier n'est utilisé pour contrebalancer au moins les forces résultant de la pression élastique de la bande sans fin souple, qui croissent avec le volume des objets, dans la courbe concave de raccordement située au pied du défilement vertical de la surface sans fin rigide, qui est dans ces brevets délimitée par une bande sans fin rigide que l'on ne peut convenablement guider et maintenir, entre ce défilement vertical et un défilement horizontal adjacent de la surface sans fin rigide.

Si, d'une manière générale, une bande sans fin rigide peut être guidée par un système de rouleaux dans ses parties convexes, comme cela est décrit dans le brevet FR-A-1 380 653, il n'en va pas de même dans un élévateur simplifié en S, au voisinage de l'entrée, qui comprend, lors du passage de la position d'arrivée horizontale des objets à la position verticale, une courbe de raccordement concave.

Afin de remédier à cet inconvénient, l'élévateur vertical à fonctionnement continu selon l'invention, qui comprend une bande sans fin et une surface sans fin s'étendant parallèlement l'une à l'autre le long de défilements sensiblement verticaux sur leur parcours respectif, la surface sans fin étant relativement rigide alors que la bande sans fin est relativement souple, et guidée par au moins une chaîne à galets sur les maillons de laquelle sont fixés par l'intermédiaire de pièces support rendues solidaires de la chaîne et présentant des orifices, des liens élastiques solidaires de la bande sans fin souple et disposés entre deux bordures longitudinales maintenues parallèles l'une à l'autre, se caractérise en ce que ces pièces support, dans les orifices desquelles les liens élastiques sont introduits et maintenus, ont une surface tournée vers la surface sans fin rigide qui a la forme d'un secteur cylindrique dont le rayon est sensiblement égal au rayon d'une courbe concave de raccordement située au pied du défilement vertical de la surface sans fin rigide, entre ce dernier et un défilement horizontal adjacent de cette même surface sans fin rigide.

De manière en soi connue, la surface sans fin rigide peut être délimitée par une bande sans fin rigide qui est guidée et entraînée par des rouleaux et qui défile à la même vitesse linéaire que la bande sans fin souple sur leurs défilements sensiblement verticaux parallèles.

Dans ce cas, et dans une forme avantageuse de réalisation de l'élévateur selon l'invention, les pièces support exercent, dans la courbe concave de raccordement entre le défilement vertical et le défilement horizontal adjacent de la bande sans fin rigide, une pression sur cette dernière afin d'assurer la concavité désirée de cette bande sans fin rigide.

Dans un autre mode de réalisation, les pièces support sont montées aux extrémités d'éléments en U solidaires d'une chaîne unique d'entraînement.

Dans tous les cas, il est avantageux que les pièces support viennent porter sur la surface sans fin rigide le long des défilements sensiblement verticaux et parallèles de la bande sans fin souple et de cette surface sans fin rigide.

D'autres caractéristiques et avantages de l'invention apparaîtront au cours de la description qui va suivre de modes de réalisation donnés à titre d'exemples non limitatifs, en regard des figures qui représentent :

la figure 1 un schéma d'installation d'un élévateur selon la présente invention ;

la figure 2 une coupe partielle de l'un des côtés de la bande élévatrice ;

les figures 3 et 4 des vues respectivement par dessus et par dessous des pièces support de tendeur de la bande d'élévation ;

la figure 5 un autre mode de réalisation.

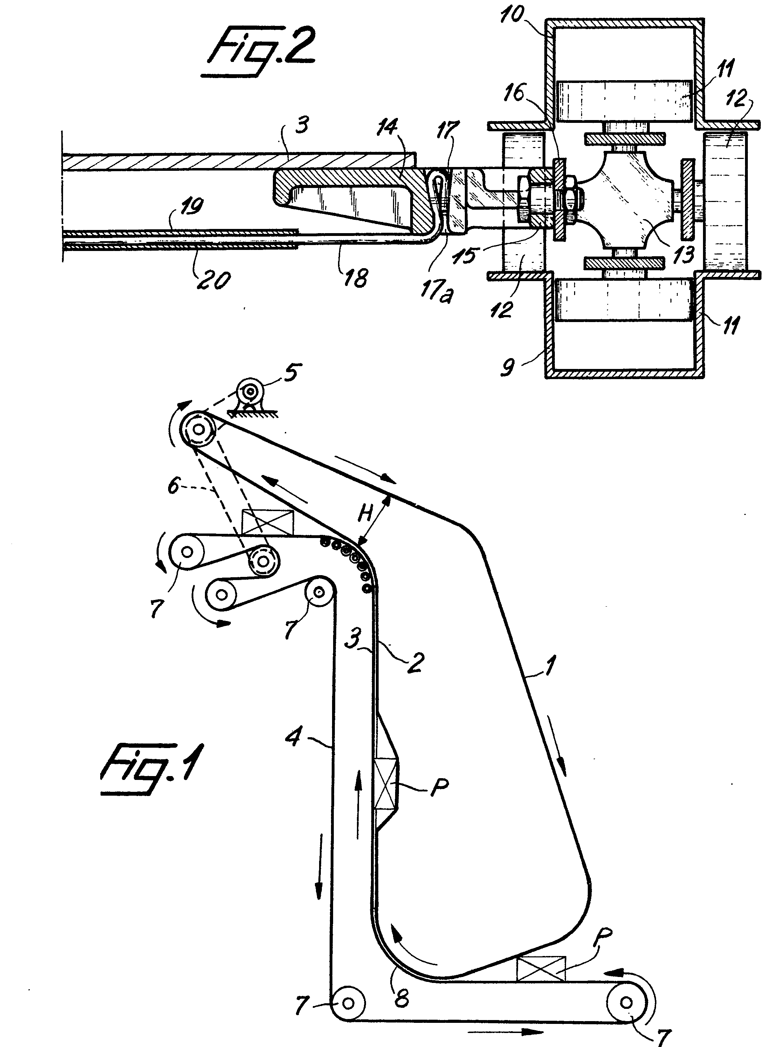

Un dispositif élévateur vertical continu est représenté schématiquement sur la figure 1. C'est-à-dire que n'ont pas été représentés sur cette figure les poutrelles et châssis servant au support des bandes de même qu'on n'a pas représenté un certain nombre de galets et poulies de tension desdites bandes. L'élévateur se compose d'une bande élévatrice 1 qui, dans sa portion verticale 2, est parallèle et vient pratiquement au contact du trajet 3 de la bande continue 4. La bande élévatrice 1 est entraînée dans le sens dextrorsum par un moteur 5 grâce à un jeu de poulies de renvoi non représenté alors que la bande 4 est entraînée dans le sens sinistrorsum à même vitesse grâce à une liaison par courroie schématisée par les traits pointillés 6 ou bien par la simple pression des objets à transporter auquel vient s'ajouter l'entraînement provoqué par les pièces de maintien en concavité de la bande. Dans ce dernier cas, la bande 4 est montée folle sur les rouleaux. Il est en effet souhaitable que, sur les portions 2 et 3, les deux bandes aient une vitesse identique ou proche et la même direction de façon à réaliser mécaniquement une liaison de type desmodromique ou sans glissement. La bande continue 4 s'enroule autour d'une série de poulies 7 assurant une tension convenable de ladite bande. En effet, dans le dispositif selon l'invention, cette bande a pour objet non pas d'entraîner les objets mais de constituer une surface de référence. Dans cette mesure, il n'est pas nécessaire de prévoir de guidage. L'introduction des objets P dans l'élévateur se fait à la partie inférieure de celui-ci entre la bande 1 et la bande 4. Compte tenue de la flexibilité de la bande 1, le paquet se trouve en quelque sorte enrobé dans la bande 1. Le problème qui se pose alors est celui du maintien dans la région 8 d'une courbe de raccordement concave formée à l'intérieur de la bande 4. En effet, celle-ci a naturellement tendance à se détendre. Selon une caractéristique de l'invention, c'est la bande élévatrice 1 qui, dans cette région, vient presser par ses bords sur la bande 4 de manière à ce qu'elle conserve la conformation concave désirée. En effet, si l'on voulait que la bande 4 soit pressée uniquement par la bande 1 dans cette région, il serait nécessaire d'appliquer des pressions importantes sur toute la largeur de la bande 1, ce qui se traduirait par l'écrasement plus ou moins important des objets fragiles. Selon l'invention, on dissocie la fonction de maintien de la bande 4 dans la courbe concave par appui sur celle-ci de pièces supports de tendeurs qui seront décrites ultérieurement et la fonction de maintien de la charge qui est effectuée par des tendeurs assujettis sur lesdits supports.

Bien que la description qui vient d'être effectuée se rapporte au fonctionnement d'un élévateur dans lequel les objets introduits à la partie inférieure du dispositif sont élevés d'une hauteur correspondant à la longueur des trajets 2 et 3, il va de soi qu'un tel dispositif peut fonctionner « mutatis mutandis » comme abaisseur d'objets, seuls les sens de rotation des bandes étant alors modifiés. Dans le fonctionnement du dispositif, un point crucial est celui de l'introduction des objets dans l'élévateur. A cette fin, les bandes 1 et 4 forment à leur partie inférieure un trajet divergent de sorte que, dans un premier temps, la partie supérieure avant de l'objet vient porter contre la bande 1. Si celle-ci est trop rigide, l'objet risque de basculer autour d'un axe horizontal. Aussi, dans le cas des élévateurs destinés à des objets importants, il est possible d'augmenter la distance entre les deux brins de la bande 1 à la partie inférieure de l'élévateur de sorte que la mise en contact des objets et de la bande 1 soit plus progressive. On est toutefois limité dans cette voie par la nécessité de disposer d'élévateurs dont l'encombrement au sol soit minimum.

Dans l'élévateur selon la présente invention, les forces nécessaires à l'élévation des objets sont assurées en grande partie par la bande élévatrice 1. Il est donc nécessaire que celle-ci soit d'une construction lui permettant d'encaisser les efforts nécessaires. Selon l'invention, la bande élévatrice 1 est entraînée et guidée par au moins une chaîne à laquelle elle est réunie par une suspension à la Cardan du type de celle décrite dans le brevet français N° 1 182 570. La figure 2 est une coupe partielle selon une direction horizontale. Selon un mode de réalisation de l'invention de chaque côté de la nappe 1 sont disposés deux rails de roulement dont un seul est représenté sur la figure 2, chaque rail de roulement étant composé de deux pièces 9 et 10 conformées en oméga et dont les bases sont parallèles, écartées l'une de l'autre et réunies au bâti de l'élévateur. A l'intérieur des pièces 9 et 10 roulent deux paires de galets respectivement 11 et 12 mutuellement perpendiculaires et reliées aux maillons de la chaîne d'entraînement. Les deux galets 11 roulent à l'intérieur de l'oméga alors que les deux galets 12 roulent sur les bords tombés de ces profilés. Les quatre galets sont réunis deux à deux par des flasques entretoises dits maillons s'articulant entre eux par des cardans 13. Sur chaque maillon 16 est montée par boulonnage une pièce support de tendeur 14 qui fait saillie vers l'intérieur. On sait que le montage à la Cardan de la pièce 14 sur la chaîne permet à celle-ci de suivre aisément tous les contours des rails. Un boulon 15 traverse le maillon 16 de la chaîne de manière à permettre l'assujettissement du support 14 sur ladite chaîne. La pièce support 14 est pourvue de plusieurs orifices 17 permettant l'introduction de l'extrémité des tendeurs 18 constitués par des cordes élastiques du type dit « sandow ». Comme, dans le brevet français N° 7 017 611, chacun des tendeurs 18 peut être inclus dans une nappe flexible constituée de deux bandes souples 19 et 20, la longueur de la nappe flexible étant supérieure à la longueur de la bande élévatrice proprement dite.

Les figures 3 et 4 représentent respectivement en vue par dessous et en vue par dessus une pièce support 14. La pièce support représentée comprend un ensemble de quatre orifices 17 permettant l'introduction de l'extrémité d'un « sandow » sans qu'il soit nécessaire de faire appel à des crochets qui se sont révélés être des pièces fragiles dans ce type d'utilisation. Les orifices 17 présentent une partie supérieure tronconique pour l'introduction de l'extrémité repliée du tendeur 18 et une partie inférieure 17a également tronconique permettant un déplacement relatif des tendeurs 18 sans que ceux-ci viennent au contact d'angles saillants qui les détruiraient rapidement. La portée sur l'angle en 17a n'a d'ailleurs lieu que lorsque les sandows sont détendus, donc la pression très faible. Dans le cas où un objet volumineux est élevé, le sandow a tendance à se placer dans l'axe de symétrie du trou 17. La surface inférieure 21 des supports 14 est de préférence arrondie avec un rayon de courbure égal au rayon de la courbure de la partie concave 8 de l'élévateur. Les orifices 22 sont destinés à permettre le passage des boulons 15 de fixation de la pièce support sur la chaîne d'entraînement et de guidage. Les pièces 14 de préférence en métal léger sont avantageusement moulées. Elles permettent d'appliquer la bande élévatrice 1 par ses bords sur la bande de maintien 4 tout au long de la partie de trajet 2 et 3, ce qui assure par ailleurs un maintien latéral des objets au cours de leur élévation. La bande de maintien 4 possède une certaine rigidité transversale et peut être par exemple constituée par une bande connue du type « Dunloflex TD 200/3 » commercialisée par la Société DUNLOP.

Comme cela apparaît sur la figure 1, il se forme dans la nappe élévatrice 1 des sortes de poches qui élèvent l'objet sans toutefois le comprimer puisque la réponse élastique de la nappe est proportionnelle au volume de l'objet. On notera que la hauteur maximum admissible des objets est la distance H séparant les brins de la nappe élévatrice 1 à la partie supérieure du dispositif élévateur.

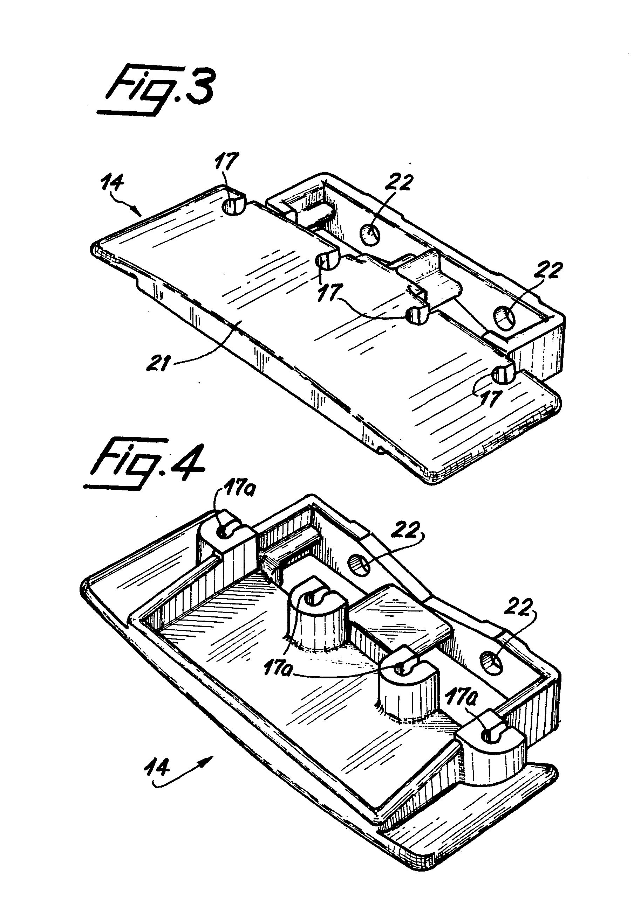

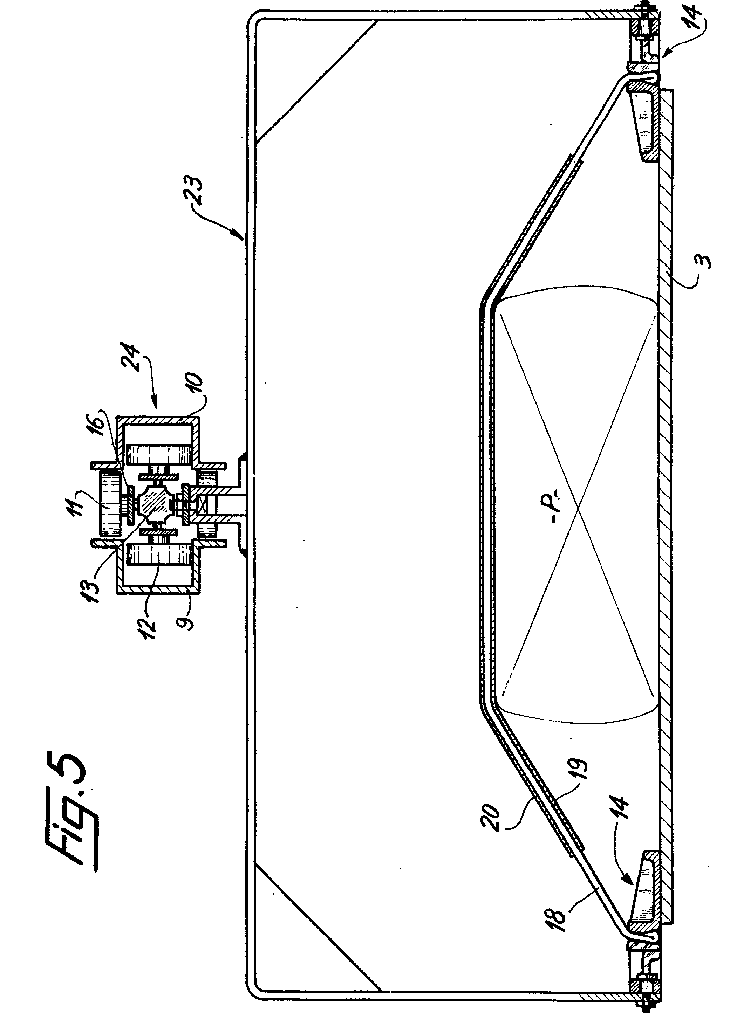

Sur la figure 5 qui représente un autre mode de réalisation, le brin 3 de la bande du guidage 4 défile dans la partie active contre le brin 2 de la bande presseuse élévatrice 1 et est maintenu par les pièces 14 comme précédemment. Toutefois, les pièces 14 sont montées sur des éléments en U 23 dont la hauteur des ailes est supérieure à la hauteur du plus grand objet pouvant être élevé par l'élévateur vertical. Dans ce mode de réalisation, une seule chaîne d'entraînement 24 est nécessaire ce qui réduit d'autant le coût de l'installation.

De plus, la souplesse d'emploi de ladite chaîne permet de modifier le trajet de la bande presseuse qui peut circuler dans plusieurs plans. La bande presseuse peut également circuler avec une seule chaîne d'entraînement en utilisant une bande dont les extrémités inverses sont réunies de manière à former un ruban de MOEBIUS.

Il va de soi que des modifications peuvent être apportées aux modes de réalisation qui viennent d'être décrits, notamment par substitution de moyens techniques équivalents, sans sortir pour cela du cadre de la présente invention tel que défini par les revendications.

## Revendications

1. Elévateur vertical à fonctionnement continu, notamment pour objets (P) à volumes irréguliers, comprenant une bande sans fin (1) et une surface sans fin (4) s'étendant parallèlement l'une à l'autre le long de défilements sensiblement verticaux (2, 3) sur leur parcours respectif, la surface sans fin étant relativement rigide, alors que la bande sans fin est relativement souple, et guidée par au moins une chaîne à galets (9, 10, 11, 12, 13, 16) sur les maillons (16) de laquelle sont fixés, par l'intermédiaire de pièces support (14) rendues solidaires de la chaîne et présentant des orifices (17), des liens élastiques (18) solidaires de la bande sans fin souple et disposés entre deux bordures longitudinales maintenues parallèles l'une à l'autre, caractérisé en ce que les pièces support (14), dans les orifices (17) desquelles les liens élastiques (18) sont introduits et maintenus, ont une surface (21) tournée vers la surface sans fin rigide (4) qui a la forme d'un secteur cylindrique dont le rayon est sensiblement égal au rayon d'une courbe concave de raccordement (8) située au pied du défilement vertical (3) de la surface sans fin rigide (4), entre ce dernier et un défilement horizontal adjacent de la surface sans fin rigide (4).

2. Elévateur selon la revendication 1, caractérisé en ce que, de manière en soi connue, la surface sans fin rigide (4) est délimitée par une bande sans fin rigide qui est guidée et entraînée par des rouleaux (7) et qui défile à la même vitesse linéaire que la bande fin souple (1) sur leurs défilements sensiblement verticaux (2, 3) parallèles.

3. Elévateur selon la revendication 2, caractérisé en ce que, dans la courbe concave de raccordement (8) située au pied du défilement vertical (3) de la bande sans fin rigide (4) entre ce dernier et le défilement horizontal adjacent de cette même bande sans fin rigide (4), les pièces support (14) exercent une pression sur la bande sans fin rigide (4) afin d'assurer la concavité désirée de cette dernière.

4. Elévateur selon l'une des revendications 1 à 3, caractérisé en ce que la bande sans fin souple (1) et la bande sans fin rigide (4) sont entraînées à la même vitesse et dans des sens différents par un organe moteur unique (5).

5. Elévateur selon l'une des revendications 1 à 4, caractérisé en ce que les pièces support (14) sont montées aux extrémités d'éléments en U (23) solidaires d'une chaîne (24) unique d'entraînement.

6. Elévateur selon l'une des revendications 1 à 5, caractérisé en ce que la bande sans fin souple (1), entraînée par une chaîne unique, est conformée en ruban de MOEBIUS.

7. Elévateur selon l'une des revendications 1 à 6, caractérisé en ce que les pièces support (14) viennent porter sur la surface sans fin rigide (4) le long des défilements sensiblement verticaux et parallèles (2, 3) de la bande sans fin souple (1) et de la bande sans fin rigide (4).

8. Elévateur selon l'une des revendications 1 à 7, caractérisé en ce que le long de son défilement sensiblement vertical (2), la bande sans fin souple (1) constitue autour de chaque objet (P) une poche dont le volume est sensiblement égal au volume de l'objet et maintenant celui-ci en suspension à l'encontre de l'action de la pesanteur.

## Claims

1. Continuously operated vertical elevator, in particular for objects (P) of irregular volume, comprising an endless belt (1) and an endless surface (4) extending parallel to each other along substantially vertical runs (2, 3) on their corresponding trajectories, the endless surface being comparatively rigid, whereas the endless belt is comparatively flexible, and guided by at least one roller chain (9, 10, 11, 12, 13, 16) on whose links (16) are secured via carrying elements (14) rendered integral with the chain and having orifices (17), resilient ties (18) in unit with the flexible endless belt and placed between two longitudinal edgings held parallel to each other, characterised in that the carrying elements (14) into whose orifices (17) are inserted and held the resilient or flexible ties (18) have a surface (21) facing towards the rigid endless surface (4) which has the form of a cylindrical sector the radius of which is substantially equal to the radius of a concave joining curvature (8) situated at the foot of the vertical run (3) of the rigid endless surface (4), between this latter and a horizontal run adjacent to the rigid endless surface (4).

2. Elevator according to claim 1, characterised in that in manner known per se, the rigid endless surface (4) is delimited by a rigid endless belt which is guided and driven by means of rollers (7) and which runs past at the same linear speed as the flexible endless belt (1) along their parallel substantially vertical runs (2, 3).

3. Elevator according to claim 2, characterised in that in the concave curvature of transition (8) situated at the foot of the vertical run (3) of the rigid endless belt (4) between this latter and the adjacent horizontal run of this same rigid endless belt (4), the carrying elements (14) exert a thrust on the rigid endless belt (4) to assure the concavity required for this latter.

4. Elevator according to one of the claims 1 to 3, characterised in that the flexible endless belt (1) and the rigid endless belt (4) are driven at the same speed and in different directions by a single driving element (5).

5. Elevator according to one of the claims 1 to 4, characterised in that the carrying elements (14) are mounted at the extremities of U-shaped elements (23) in unit with a single driving chain (24).

6. Elevator according to one of the claims 1 to 5, characterised in that the flexible endless belt (1) driven by a single chain is shaped to form a Moebius strip.

7. Elevator according to one of the claims 1 to 6, characterised in that the carrying elements (14) bear against the rigid endless surface (4) along runs (2, 3) which are substantially vertical and parallel, of the flexible endless belt (1) and of the rigid endless belt (4).

8. Elevator according to one of the claims 1 to 7, characterised in that along its substantially vertical run (2), the flexible endless belt (1) forms a pocket around each object (P) the volume of which is substantially equal to the volume of the object, and holding the same suspended against the action of the force of gravity.


**Ansprüche**


1. Senkrechtförderer für kontinuierliche Förderung, insbesondere für Gegenstände (P) unregelmäßigen Volumens, mit einem endlosen Band (1) und einer endlosen Fläche (4), die sich in im wesentlichen vertikal verlaufenden Abschnitten ihrer Bahnen parallel zueinander erstrecken, wobei die endlose Fläche verhältnismäßig steif ist, während das endlose Band verhältnismäßig nachgiebig ist und von mindestens einer mit Rollen versehenen Kette (9, 10, 11, 12, 13, 16) geführt ist, an deren Gliedern (16), mittels mit der Kette verbundener und mit Aussparungen (17) versehener Tragteile (14), elastische Verbindungsmittel (18) befestigt sind, die mit dem nachgiebigen endlosen Band verbunden und zwischen zwei langgestreckten, parallel zueinander gehaltenen Einfassungen angeordnet sind, dadurch gekennzeichnet, daß die Tragteile (14), in deren Aussparungen (17) die elastischen Verbindungsmittel (18) eingeführt und gehalten sind, eine der steifen endlosen Fläche (4) zugekehrte Oberfläche (21) haben, die die Form eines Zylindersektors hat, dessen Radius im wesentlichen gleich dem Radius eines konkaven Übergangsbogens (8) ist, der sich am Fuß des vertikalen Bahnabschnittes (3) der steifen endlosen Fläche (4) zwischen diesem und einem anschließenden horizontalen Bahnabschnitt der starren endlosen Fläche (4) befindet.

2. Förderer nach Anspruch 1, dadurch gekennzeichnet, daß die steife endlose Fläche (4) in an sich bekannter Weise durch ein steifes endloses Band begrenzt ist, das von Walzen (7) geführt und angetrieben ist und das dieses und das nachgiebige endlose Band (1) auf ihren im wesentlichen vertikalen Bahnabschnitten (2, 3) mit der gleichen Lineargeschwindigkeit laufen.

3. Förderer nach Anspruch 2, dadurch gekennzeichnet, daß innerhalb des konkaven Übergangsbogens (8), der sich am Fuß des vertikalen Bahnabschnittes (3) des steifen endlosen Bandes (4) zwischen diesem und dem anschließenden horizontalen Bahnabschnitt desselben steifen endlosen Bandes (4) befindet, die Tragteile (14) auf das steife endlose Band (4) einen Druck ausüben, um die gewünschte Konkavität desselben zu gewährleisten.

4. Förderer nach einem der Ansprüche 1 bis 3, dadurch gekennzeichnet, daß das nachgiebige endlose Band (1) und das steife endlose Band (4) mit der gleichen Geschwindigkeit und in verschiedenen Richtungen von einem einzigen motorischen Antrieb (5) angetrieben sind.

5. Förderer nach einem der Ansprüche 1 bis 4, dadurch gekennzeichnet, daß die Tragteile (14) an den Enden von U-förmigen Elementen (23) angeordnet sind, die mit einer einzigen Antriebskette (24) verbunden sind.

6. Förderer nach einem der Ansprüche 1 bis 5, dadurch gekennzeichnet, daß das von einer einzigen Kette angetriebene nachgiebige endlose Band (1) als Möbius-Band ausgebildet ist.

7. Förderer nach einem der Ansprüche 1 bis 6, dadurch gekennzeichnet, daß die Tragteile (14) innerhalb der im wesentlichen vertikalen und parallelen Bahnabschnitte (2, 3) des nachgiebigen endlosen Bandes (1) und des steifen endlosen Bandes (4) auf der Oberfläche der steifen endlosen Fläche (4) ruhen.

8. Förderer nach einem der Ansprüche 1 bis 7, dadurch gekennzeichnet, daß das nachgiebige endlose Band (1) innerhalb seines im wesentlichen vertikalen Bahnabschnittes (2) um jeden Gegenstand (P) eine Tasche bildet, deren Volumen im wesentlichen gleich dem Volumen des Gegenstandes ist und die denselben entgegen der Schwerkraft in der Schwebe hält.

0 015 790

*Fig.2*

*Fig.1*

_Fig.3_

_Fig.4_

_Fig.5_

0 015 790